# EUROPÄISCHE PATENTSCHRIFT

(11) **EP 1 892 055 B1**
(45) Veröffentlichungstag und Bekanntmachung des Hinweises auf die Patenterteilung: **01.07.2009**
(21) Anmeldenummer: 07016314.2
(22) Anmeldetag: 21.08.2007
(51) Int. Cl.: B23Q 1/54, B23C 1/12

(54) **Kompakte Fräskopfeinheit**
Compact mill head unit
Unité de tête de fraisage compacte

(30) Priorität: 22.08.2006 DE 102006039202
(43) Veröffentlichungstag der Anmeldung: 27.02.2008
(73) Patentinhaber: F. Zimmermann GmbH, 73770 Denkendorf (DE)
(72) Erfinder: Schrott, Rüdiger, 73269 Hochdorf (DE)
(74) Vertreter: Rüger, Barthelt & Abel Patentanwälte

(56) Entgegenhaltungen:
- CH-A- 533 481
- DE-A1- 10 027 509
- DE-A1- 19 850 603
- US-A- 2 445 039
- US-A- 3 668 971
- US-A- 4 101 405

## Beschreibung

Die vorliegende Erfindung betrifft eine Werkzeugkopfeinheit mit einer Werkzeugmaschinenspindel, bspw. eine Fräskopfeinheit mit einer Motorfrässpindel, sowie eine Maschine, bspw. Fräsmaschine, mit einer derartigen Werkzeugspindeleinheit.

In der nachveröffentlichten Patentanmeldung mit dem Aktenzeichen 10 2005 043 835.0, eingereicht am 13.09.2005, ist eine Portalfräsmaschine beschrieben, die ein auf Seitenständern abgestütztes Portal aufweist, das über einem mit dem Fundament fest verankerten Maschinentisch abgestützt ist. An dem in horizontaler X-Richtung verfahrbaren Portal ist in senkrechter Anordnung ein Ausleger gehalten, der über einen Kreuzschlitten in einer zu der X-Richtung senkrechten horizontalen Y-Richtung bewegbar ist. Der Ausleger weist einen in vertikaler Z-Richtung bewegbaren Tragbalken auf, der einen Fräskopf mit einer Motorfrässpindel trägt.

Der Fräskopf selbst weist eine Gabel auf, die mittels eines Torquemotors um eine mit der Z-Achse zusammenfallende C-Achse drehbar ist. An zwei Gabelarmen ist das Spindelgehäuse einer Frässpindel um eine zu der C-Achse senkrechte A-Achse schwenkbar aufgenommen. Als Antrieb für die Verschwenkung des Spindelgehäuses um die A-Achse dient ein weiterer Torquemotor. Die Frässpindel weist ein Motor angetriebenes Fräswerkzeug auf, das aus dem Spindelgehäuse nach außen ragt, um im Betrieb eine Zerspanoperation an einem auf dem Maschinentisch positionierten Werkstück durchzuführen.

Die Fräsmaschine ist zur Herstellung von Werkzeugen, Formen und Modellen oder für die Produktion in der Automobil-, Luft- und Raumfahrtindustrie vorgesehen und dazu geeignet, sehr große und komplizierte 3D-Teile, die äußerst feine Oberflächendetails aufweisen können, zu fertigen. Es sind aufwendige 5-Achsen-Simultanbearbeitungen mit hoher Präzision unter verhältnismäßig geringem Zeitaufwand möglich.

Allerdings sind mit dieser Art von Fräsköpfen, die eine Kombination aus einer bspw. vertikalen Drehachse C und einer hierzu senkrechten, bspw. horizontalen Schwenkachse A verwenden, gewisse Nachteile verbunden. Bei der Positionierung des Fräswerkzeugs in die zur Bearbeitung erforderliche Winkellage in Bezug auf das Werkstück kann bei ungünstiger Winkelstellung um die A-Achse gegebenenfalls eine Verdrehung des Fräswerkzeugs um einen beträchtlichen Winkel um die C-Achse erforderlich sein. Dies insbesondere, wenn wegen der erforderlichen Kabelführung für die Energieversorgung und Signalübertragung die Drehung um die C-Achse auf ca. ± 180° in Bezug auf eine vorbestimmte Nulllage begrenzt ist. Im Extremfall kann für eine nur geringe Lageänderung ein Zurückdrehen um die C-Achse um annähernd eine gesamte Umdrehung erforderlich sein. Dadurch ist die Bearbeitungsgeschwindigkeit deutlich verringert. Es könnten zwar auch Schleifringe zur Übertragung von Energie und Signalen eingesetzt werden, diese erhöhen jedoch die Kosten eines Fräskopfs wesentlich.

Außerdem ist bei Verwendung eines Fräskopfs mit A- und C-Achse eine elektronische Orientierungsfehlerkompensation nicht oder nur mit sehr hohem Aufwand möglich. Daher müssen sämtliche Komponenten des Fräskopfs und der Fräsmaschine mit sehr hoher Präzision gefertigt sein und arbeiten, um die erforderliche Qualität zu erhalten.

Aus der WO 00/25976 A2 ist ein auf dem Prinzip der Stabkinematik basierender Gelenkwerkzeugkopf bekannt. Dieser weist eine in drei Achsen bewegliche Werkzeugplattform, wenigstens drei an der Werkzeugplattform angelenkte, unabhängig voneinander und parallel verfahrbare Lenker und wenigstens drei im Abstand um die Werkzeugplattform herum angeordnete, untereinander parallele Linearbewegungsantriebe für die daran angelenkte Lenker auf. Die Lenker sind an der Werkzeugplattform allseits beweglich und an den Linearbewegungsantrieben um senkrecht zur Bewegungsrichtung der Linearbewegungsantriebe verlaufende Achsen schwenkbar angelenkt. An der Werkzeugplattform kann eine Motorspindel angeordnet sein, die dann um zwei Schwenkachsen und längs einer Linearachse bewegbar ist. Aufgrund der Lagerung der Werkzeugplattform kann die Motorspindel schnell in jede erforderliche Lage innerhalb des Messraums gebracht werden. Allerdings ist der Messraum aufgrund einer stark eingeschränkten Länge der Linearachse und auf etwa ± 40° begrenzter Schwenkwinkel verhältnismäßig klein, wodurch der Anwendungsbereich begrenzt ist. Große 3D-Teile, wie sie bspw. im Modellformen- und Formenwerkzeugbau üblich sind, sind kaum fertigbar.

Aus der DE 198 50 603 A1 ist eine Fräskopfeinheit mit einer kardanischen Lagerung einer Frässpindel bekannt. Die Fräskopfeinheit weist ein Lagergehäuse, das an einem in X-, Y- und Z-Richtung beweglichen Spindelbalken befestigt ist, und ein Schwenkgehäuse auf, das in dem Lagergehäuse um eine erste Achse B schwenkbar aufgenommen ist. Die Schwenkbewegung um die Achse B wird durch Torquemotoren bewirkt, die beidseitig an dem Lagergehäuse angeflanscht sind und das Schwenkgehäuse direkt antreiben. In dem Schwenkgehäuse ist ein Spindelaufnahmegehäuse um eine waagrechte Achse A schwenkbar angeordnet und wird durch beidseitig angeordnete Torquemotoren geschwenkt. Das Spindelaufnahmegehäuse trägt eine Motorfrässpindel mit Direktantrieb für ein Fräswerkzeug. Durch die zwei zueinander orthogonalen Schwenkachsen A, B der Fräskopfeinheit, die zu der Z-Achse nicht parallel verlaufen, kann die Frässpindel schnell in die jeweils erforderliche Bearbeitungslage unmittelbar verschwenkt werden. Eine Verschwenkung um eine mit der Z-Achse zusammenfallende C-Achse ist nicht erforderlich. Dadurch ist bei dieser Art einer Fräskopfeinheit mit A- und B-Schwenkachsen eine elektronische Orientierungsfehlerkompensation möglich.

Die kardanische Lagerung, wie sie in der DE 198 50 603 A1 vorgeschlagen wird, baut jedoch verhältnismäßig groß. Jedes Gehäuse ist im Wesentlichen kastenartig ausgebildet, um darin ein weiteres Gehäuse gemeinsam mit einer Antriebswelle für dieses aufzunehmen. Dadurch sind auch die Schwenkwinkel um die Schwenkachsen A, B stark eingeschränkt.

US 2 445 039 A beschreibt eine Werkzeugmaschine mit einem Werkzeug, das über eine Halterung an einem horizontalen Trägerarm gehaltert ist, der an einer vertikalen Säule befestigt ist. Die Halterung weist einen den Trägerarm umgreifenden zentralen Abschnitt mit Befestigungsmitteln auf, die eine Positionierung und Fixierung der Halterung in beliebiger Winkelstellung rings um die Längsachse des zylindrischen Trägerarms ermöglichen, und eine Bogenführungseinrichtung auf, die sich in Form eines unterbrochen kreisförmigen Flansches von einer Seite des zentralen Abschnitts aus über seine Vorderseite hinweg bis zu der gegenüberliegenden Seite in Bezug auf seine Längsachse erstreckt. An der Außenseite der Bogenführungseinrichtung ist das Werkzeug gelagert, das rings um die Bogenführungseinrichtung verstellt und über zugehörige Klemmmittel in einer gewünschten Drehstellung rings um die Mittelachse der Bogenführungseinrichtung fixiert werden kann. Die Positionierung und Fixierung des Werkzeugs erfolgt manuell.

US 4 101 405 A beschreibt eine Werkzeugmaschine mit einer bogenförmigen Zahnstange, die an einem Maschinengestell drehbar gelagert und über ein Ritzel von einem Servomotor drehbar angetrieben ist. Die Zahnstange, die eine Erstreckung von 90° aufweist, trägt an ihrem einen Ende eine Lagerbuchse, in der eine Welle eines Trägerams drehbar gelagert ist, der an seinem anderen Ende ein Werkzeug trägt. Der Trägerarm wird von einem weiteren Servomotor in der Lagerbuchse gedreht.

Ausgehend davon ist es eine Aufgabe der vorliegenden Erfindung, die obigen Nachteile bzw. Unzulänglichkeiten zu beseitigen. Insbesondere ist es eine Aufgabe der vorliegenden Erfindung, eine für den Werkzeug-, Formen- und Modellbau geeignete dynamische Werkzeugkopfeinheit zu schaffen, die verhältnismäßig kompakt aufgebaut ist und relativ große Schwenkwinkel ermöglicht. Vorzugsweise sollte der Aufbau der Werkzeugkopfeinheit eine elektronische Orientierungsfehlerkompensation ermöglichen.

Eine weitere Aufgabe der vorliegenden Erfindung ist es, eine Werkzeugmaschine mit einer derartigen Werkzeugkopfeinheit zu schaffen, mit der auch große 3D-Teile mit hoher Bearbeitungsgeschwindigkeit gefertigt werden können.

Diese und weitere Aufgaben der vorliegenden Erfindung werden durch die erfindungsgemäße Werkzeugkopfeinheit mit den Merkmalen des Patentanspruchs 1 und die Werkzeugmaschine nach Patentanspruch 26 gelöst.

Die für spanabhebende Bearbeitung von Werkstücken vorgesehene Werkzeugkopfeinheit gemäß der Erfindung weist einen Träger, der eine im Einsatz bspw. vertikale Längsachse Z definiert, einen an dem Träger gelagerten Schwenkkörper, der mittels einer ersten Antriebseinrichtung in Bezug auf den Träger um eine vorzugsweise zu der Längsachse Z senkrechte erste Schwenkachse B verschwenkbar ist, und eine an dem Schwenkkörper gelagerte Werkzeugmaschinenspindel auf, die mittels einer zweiten Antriebseinrichtung um eine zweite Schwenkachse A schwenkbar ist. Vorzugsweise verlaufen die Schwenkachsen A und B senkrecht zueinander und schneiden die Z-Achse in etwa im Zentrum der Werkzeugmaschinenspindel. Die Werkzeugmaschinenspindel trägt an ihrem freien Ende ein Werkzeug. Der schwenkkörper weist einen C-förmigen Grundkörper mit einer Umfangsfläche, axialen Stirnflächen und einer in der Umfangfläche vorgesehenen Ausnehmung auf, die zwischen den C-Beinen des Grundkörpers durch den gesamten Schwenkkörper hindurch verläuft und zu den Stirnflächen hin offen ist.

Erfindungsgemäß ist bzw. sind zur schwenkbaren Lagerung und Führung des Schwenkkörpers in Bezug auf den Träger ausschließlich eine oder mehrere dazwischen wirksame Bogenführungseinrichtung bzw. -einrichtungen angeordnet. Die wenigstens eine Bogenführungseinrichtung ist erfindungsgemäß längs des Umfangs des Grundkörpers des Schwenkkörpers angeordnet. Sie bewerkstelligt die Lagerung und Führung alleine; weitere Mittel sind hierzu weder erforderlich noch vorgesehen. Die Werkzeugmaschinenspindel ist in dem Schwenkkörper an beiden C-Beinen des Grundkörpers drehbar gelagert und wenigstens abschnittsweise zwischen den C-Beinen des Grundkörpers in der Ausnehmung untergebracht ist, wobei das Werkzeug in einer entlang der Längsachse Z ausgerichteten Nulllage über die Umfangsfläche hinausragt und bei einer Verschwenkung um die zweite Schwenkachse A über die axialen Stirnflächen des Schwenkkörpers hinausragen kann. Dadurch und ist die Grundlage für einen einfachen, kompakten Aufbau und relativ große Schwenkwinkel um nahezu oder sogar mehr als 180 Grad geschaffen.

Unter einer Bogenführungseinrichtung soll in dem hier verwendeten Sinne eine bogenförmige Linearführung zur Realisierung sehr genauer Kreis- oder Bogenbewegungen verstanden werden. Das zu verschwenkende Element, bspw. der Schwenkkörper, ist an einem anderen Bauteil, bspw. dem Träger, nur über die erfindungsgemäße Bogenführungseinrichtung geführt und gelagert. Eine weitere Abstützung ist nicht erforderlich. Dadurch ist es nicht länger erforderlich, ein Bauteil, das ein anderes Element schwenkbar aufnimmt, nach dem Stand der Technik gabelförmig oder kastenartig auszubilden. Die Bauteile können deutlich kleiner dimensioniert und der Platzbedarf auf ein Minimum verringert werden. Dies ergibt einen kompakten Aufbau der Werkzeugkopfeinheit mit geringerer Störkontur, wobei sowohl die Kosten als auch die zu bewegenden Massen wesentlich reduziert werden können. Es sind höhere Beschleunigungen der angetriebenen Achsen möglich, so dass eine hochdynamische Werkzeugkopfeinheit und Werkzeugmaschine verwirklicht werden kann. Gegebenenfalls vorhandene X-, Y- und Z-Antriebe zum Verfahren der Werkzeugkopfeinheit in allen drei Raumrichtungen können kleiner dimensioniert werden. Durch das Vorsehen der erfindungsgemäßen Bogenführungseinrichtung kann eine präzise Führung und eine genaue und schnelle Bearbeitung auch komplexer Formen bewerkstelligt werden. Dies insbesondere, weil der erfindungsgemäße Aufbau des Schwenkkörpers und die Bogenführungseinrichtung Schwenkbewegungen um bis zu ± 90° in Bezug auf eine definierte Nulllage oder sogar mehr ermöglichen. Die Nulllage kann bspw. durch die Richtung der Z-Achse vorgegeben sein.

Durch Verwendung der beiden orthogonalen Schwenkachsen A und B der Werkzeugkopfeinheit, die beide nichtparallel und insbesondere rechtwinklig zu der Z-Achse verlaufen, ist eine elektronische Orientierungsfehlerkompensation möglich. Hierzu kann der Messraum in einem Kalibrierungsvorgang bei unterschiedlichen Positionierungen der Fräskopfeinheit genau vermessen werden, und die erfassten Abweichungen zwischen den Ist- und Sollwerten der Positionierungen können durch eine Steuerungseinheit während der Bearbeitung herangezogen werden, um die Fräskopfeinheit automatisch in die präzise Position nachzustellen. Somit können Anforderungen an die Herstellungs- und Montagegenauigkeit der Bauteile, Führungen und Lager bei gleichbleibender Güte der erzeugten Produkte verringert werden. Ferner werden Kosten eingespart.

Die erfindungsgemäße Werkzeugkopfeinheit ist in einer bevorzugten Anwendung als Fräskopfeinheit zur Aufnahme einer Frässpindel vorgesehen. Vorzugsweise weist sie eine Motorfrässpindel mit einem eigenen Motorantrieb für das Werkzeug der Frässpindel auf. Es kann auch eine Frässpindel mit gesondertem, bspw. von einem Hauptantrieb abgeleitetem Spindelantrieb vorgesehen sein. Die Frässpindel ist vorzugsweise in einer Spindelaufnahme untergebracht, die an dem Schwenkkörper schwenkbar gehaltert ist und einen einfachen und schnellen Werkzeugaustausch ermöglicht. Es sind auch andere Anwendungen der erfindungsgemäßen Werkzeugkopfeinheit, bspw. zum Bohren und für andere spanabhebende Bearbeitungsoperationen, möglich.

Zur Realisierung der erfindungsgemäßen Bogenführungseinrichtung weist diese wenigstens eine kreisbogenförmige Führungsschiene, die entweder an dem Schwenkkörper und/oder an der Spindel bzw. der Spindelaufnahme angebracht ist, und wenigstens einen zugehörigen, an der Führungsschiene gelagerten Führungswagen auf, der dann an dem Träger und/oder an dem Schwenkkörper befestigt ist. Eine hohe Steifigkeit kann erzielt werden, wenn zwei Führungsschienen um die jeweilige Schwenkachse B bzw. A herum koaxial sowie axial im Abstand und parallel zueinander vorgesehen werden. Außerdem sind vorzugsweise jeder Führungsschiene wenigstens zwei voneinander beabstandete Führungswagen zugeordnet. In Abhängigkeit von dem Abstand zwischen den Führungswagen kann die Steifigkeit und der maximal mögliche Schwenkwinkel den einzelnen Anforderungen gemäß angepasst werden. Die Führungswagen sind an der Führungsschiene über genau angepasste Anschlussflächen und vorzugsweise über Kugeln oder dgl. gelagert, um eine weitgehend spielfreie und präzise Bewegung bei geringer Reibung zu ermöglichen. Die Führungswagen und Führungsschiene könnten auch lediglich gleitend miteinander verbunden sein.

Die Führungsschiene ist in Form eines Kreisbogensegmentes gestaltet, das einen Bogensegmentwinkel umschließt. Für große Schwenkwinkel beträgt der Bogensegmentwinkel wenigstens 180°, vorzugsweise wenigstens 200°. Er kann vorteilhafterweise bis zu 270 Grad oder sogar mehr betragen, so dass die Werkzeugmaschinenspindel unter einem spitzen Winkel gegen die Z-Achse positioniert werden kann, um auch komplizierte Oberflächenstrukturen mit Hinterschneidungen und dgl. fertigen zu können. Zur Erleichterung der Montage und zur Erzielung einer hohen Führungspräzision wird eine einteilige Ausbildung der Führungsschiene bevorzugt. Eine mehrteilige Ausbildung mit einzelnen genau auf Stoß gefertigten und angebrachten Schienensegmenten ist ebenfalls möglich.

In einer besonders bevorzugten Ausführungsform ist die kreisbogensegmentförmige Führungseinrichtung wirkungsmäßig zwischen dem Träger und dem Schwenkkörper eingefügt. Eine sehr kompakte Bauweise für große Schwenkwinkel wird erhalten, wenn dabei die Führungsschiene bzw. Führungsschienen an dem Schwenkkörper befestigt ist bzw. sind, während der Träger die Führungswagen umfasst. Als Träger kann ein im Wesentlichen länglicher Trägerbalken verwendet werden, der an seinem dem Schwenkkörper zugewandten Ende zwei Trägerfortsätze aufweist, die das Schwenkelement nur geringfügig umgreifen. Nachdem keine zentrale Welle des Schwenkkörpers gehaltert werden muss, ist die Ausdehnung der Trägerfortsätze in Längsrichtung Z deutlich kleiner als die halbe Längserstreckung oder Höhe des Schwenkelementes gewählt. Die Ausdehnung der Trägerfortsätze kann nur einen kleinen Bruchteil, bspw. wesentlich weniger als ein Viertel der Längserstreckung des Schwenkelementes betragen. Die Trägerfortsätze müssen lediglich die Führungswagen aufnehmen und einen Abschnitt der an dem Schwenkkörper angebrachten Führungsschienen umgreifen.

Der Schwenkkörper weist vorzugsweise einen im Wesentlichen zylindrischen Grundkörper mit einer C-förmigen Gestalt auf, deren Form und Größe durch die kreisbogenförmigen Führungsschienen definiert sind. Die Führungsschienen sind bspw. an den axialen Stirnseiten mit der Umfangsfläche des Schwenkkörpers im Wesentlichen bündig und den in den Trägerfortsätzen angeordneten Führungswagen gegenüberliegend angebracht. Zwischen den freien Enden der Führungsschienen weist auch der Grundkörper eine parallel und durch die erste Schwenkachse B, insbesondere senkrecht zu der zweiten Schwenkachse A verlaufende Ausnehmung auf, in der die Werkzeugspindel bzw. Spindelaufnahme beweglich angeordnet ist. Die Weite der Ausnehmung bzw. der senkrechte Abstand zwischen den freien Enden der Führungsschienen ist größer als die in Richtung des senkrechten Abstands gemessene Abmessung der Werkzeugmaschinenspindel bzw. Spindelaufnahme. Somit kann die Werkzeugmaschinenspindel bei einer Verschwenkung um die zweite Schwenkachse A die durch die axialen Stirnflächen des Grundkörpers bzw. durch die Führungsschienen festgelegten Schwenkebenen um die erste Schwenkachse B durchdringen.

In einer Weiterbildung dieser Ausführungsform weist der zylindrische Schwenkkörper zwei in Richtung der ersten Schwenkachse B parallel und im Abstand zueinander angeordnete C-förmige Kreisscheibensegmente auf, die durch zwei Verbindungsstege miteinander verbunden sind, die in Richtung der zweiten Schwenkachse A parallel zueinander angeordnet sind. Zwischen den Verbindungsstegen ist eine zu der Spindelaufnahmeausnehmung führende Durchgangsöffnung ausgebildet, die die Durchführung von Kabeln zur Signalübermittlung und Energieversorgung der ersten und zweiten Antriebseinrichtung ermöglicht.

Die erste Antriebseinrichtung zur Verschwenkung des Schwenkkörpers um die erste Schwenkachse B weist einen an dem Träger befestigten Motor, vorzugsweise einen Servomotor, sowie eine zwischen dem Motor und dem Schwenkkörper wirkungsmäßig eingefügte untersetzende Getriebeeinrichtung auf. In einer bevorzugten Ausgestaltung der Getriebeeinrichtung ist an der Umfangsfläche des zylindrischen Schwenkkörpers, vorzugsweise an einem Scheibensegment, eine vorzugsweise als Schrägverzahnung ausgebildete Stirnverzahnung vorgesehen, mit der ein an der Antriebswelle des Motors angebrachtes Ritzel kämmend in Eingriff steht. Vorzugsweise ist lediglich eine Untersetzungsstufe vorgesehen. Es kann ein elektronisch verspannter Antrieb geschaffen werden, indem bspw. zwei Servomotoren verwendet werden, die in Umfangsrichtung des Grundkörpers im Abstand zueinander angeordnet sind, und eine Motorsteuerung bewirkt, dass die Servomotoren etwas gegeneinander arbeiten. Dadurch wird auf einfache Weise ein dauerhaft spielfreier und wartungsfreier Antrieb geschaffen. Eine mechanische Verspannung eines Räderwerks oder über ein Federmittel ist ebenfalls möglich.

Zur Erfassung des relativen Schwenkwinkels zwischen dem Träger und dem Schwenkelement ist eine erste Messeinrichtung vorgesehen. Diese kann bspw. durch ein an einem der Scheibensegmente befestigtes Maßband und einen an dem Träger angebrachten Lesekopf gebildet sein, der die relative Winkelstellung in vorzugsweise berührungsloser Weise erfasst. Aus der Technik sind hierzu unterschiedliche, bspw. optisch, magnetisch oder kapazitiv arbeitende oder auch taktile Messsysteme bekannt.

Zur Realisierung der Schwenkbewegung um die zweite Schwenkachse A ist in dem Schwenkkörper, z.B. in den Verbindungsstegen, über geeignete Lagermittel, z.B. Kreuzrollenlager, eine Welle drehbar gelagert, auf der die Werkzeugmaschinenspindel bzw. Spindelaufnahme drehfest sitzt. Die zweite Antriebseinrichtung kann in diesem Fall vorteilhafterweise durch einen Torquemotor gebildet sein, der zum direkten Antrieb und zur Steuerung der Drehung der Werkzeugspindel eingerichtet ist. Ein Getriebe ist nicht erforderlich. Dadurch können Dynamik und Steifigkeit der Werkzeugkopfeinheit verbessert werden. Der relative Schwenkwinkel zwischen der Werkzeugspindel und dem Schwenkkörper wird durch eine weitere Messeinrichtung mit einem an der Welle angebrachten Drehgeber und einem an dem Schwenkkörper befestigten Drehaufnehmer erfasst.

Optional kann die Lagerung und Führung der Werkzeugspindel an dem Schwenkkörper auch über eine erfindungsgemäße Bogenführungseinrichtung bewirkt werden. Die Bogenführungseinrichtung ist dann entsprechend durch ein oder zwei an der Werkzeugspindel bzw. Spindelaufnahme angebrachte kreis- oder bogenförmige Führungsschienen und an dem Schwenkkörper befestigte Führungswagen gebildet. Hinsichtlich möglicher Ausgestaltungen und Vorteile der Bogenführungseinrichtung wird auf die vorstehenden Erläuterungen verwiesen.

Gemäß einem weiteren Aspekt der vorliegenden Erfindung ist eine Werkzeugmaschine, insbesondere eine bspw. in Portalbauweise ausgeführte Fräsmaschine, geschaffen, die einen in einem dreidimensionalen Messraum in X-, Y- und Z-Richtung positionierbaren Ausleger aufweist, der eine Werkzeugkopfeinheit, insbesondere Fräskopfeinheit, mit den vorstehend erwähnten Merkmalen aufweist. Es kann eine für sehr große 3D-Teile und zur 5-Achsen-Simultanbearbeitung geeignete Werkzeugmaschine mit einem filigranen Werkzeugkopf geschaffen werden, mit dem auch komplizierte und äußerst feine Oberflächendetails mit hoher Präzision und Bearbeitungsgeschwindigkeit gefertigt werden können.

Weitere vorteilhafte Einzelheiten der Erfindung ergeben sich aus Unteransprüchen, der Zeichnung sowie der zugehörigen Beschreibung. In der Zeichnung ist ein Ausführungsbeispiel des Gegenstandes der Erfindung dargestellt. Es zeigen:
Fig. 1 eine erfindungsgemäße Portalfräsmaschine in einer schematisierten perspektivischen Darstellung;
Fig. 2 eine vergrößerte Darstellung eines in der Portalfräsmaschine nach Fig. 1 verwendeten erfindungsgemäßen Fräskopfes, in einer vereinfachten Perspektivdarstellung;
Fig. 3 den in Fig. 2 veranschaulichten Fräskopf mit abgenommenem Träger in einer schematisierten Perspektivdarstellung, in einem anderen Maßstab; und
Fig. 4 eine weitere Ausführungsform eines erfindungsgemäßen Fräskopfes in einer vereinfachten Prinzipdarstellung.

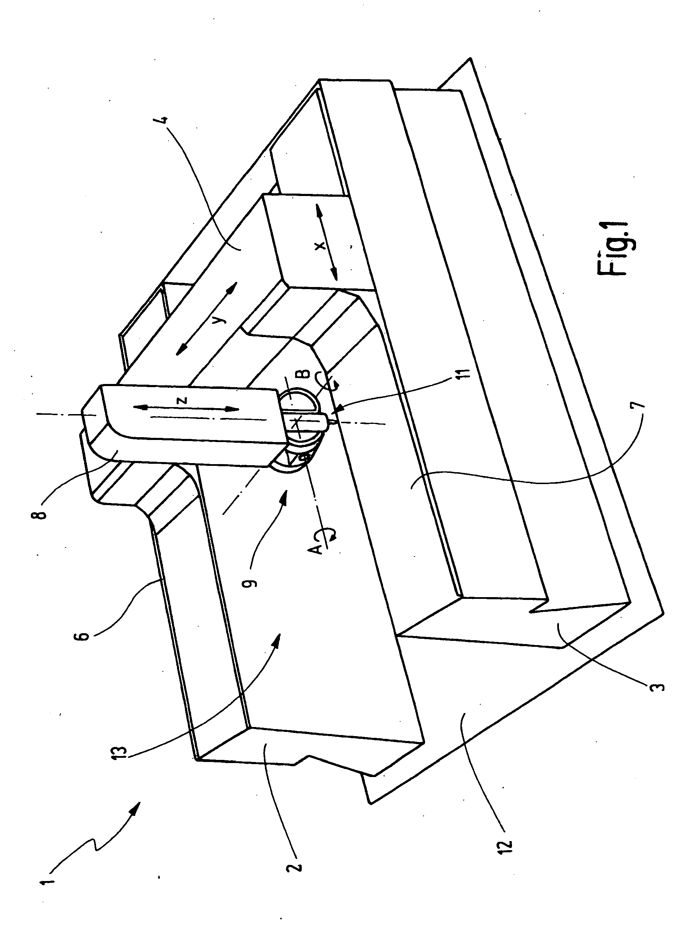

In Fig. 1 ist auf schematisierte Weise eine Portalfräsmaschine 1 gemäß der vorliegenden Erfindung veranschaulicht. Die Portalfräsmaschine 1 weist ein auf länglichen massiven Seitenständern 2, 3 abgestütztes Portal 4 auf, das in einer durch einen Doppelpfeil angezeigten horizontalen X-Richtung verfahrbar und über hier lediglich angedeutete Führungen 6, 7 präzise geführt ist, die an den beiden Seitenständern 2, 3 vorgesehen sind. An dem Portal 4 ist in senkrechter Anordnung ein Tragbalken 8 gehalten, der über einen Kreuzschlitten längs des Portals 4 in der angezeigten horizontalen Y-Richtung und über einen Z-Schlitten in vertikaler Z-Richtung bewegbar ist. Der Tragbalken 8 trägt einen Fräskopf 9 mit einer Frässpindel 11, die zur zerspanenden Bearbeitung eines hier nicht näher veranschaulichten Werkstücks dient, das auf einem mit dem Fundament fest verankerten Maschinentisch 12 anzuordnen ist. Der Fräskopf 9 mit der Frässpindel 11 kann somit in allen drei Koordinatenrichtungen X, Y und Z eines durch die Seitenständer 2 festgelegten dreidimensionalen Messraums 13 beliebig positioniert werden. Die Antriebseinrichtungen für die linearen Achsen, bspw. Linearmotoren, zugehörige Führungen, Schlitten, Wegmesssysteme und Steuerungen sind in Fig. 1 aus Einfachheitsgründen nicht explizit dargestellt. Sie sind als solche bekannt und nicht Gegenstand der Erfindung.

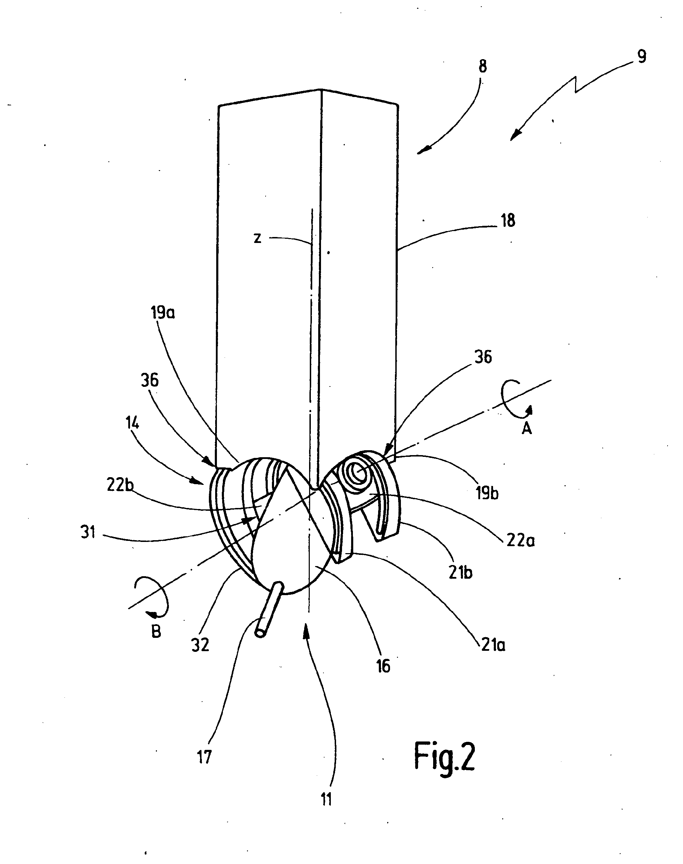

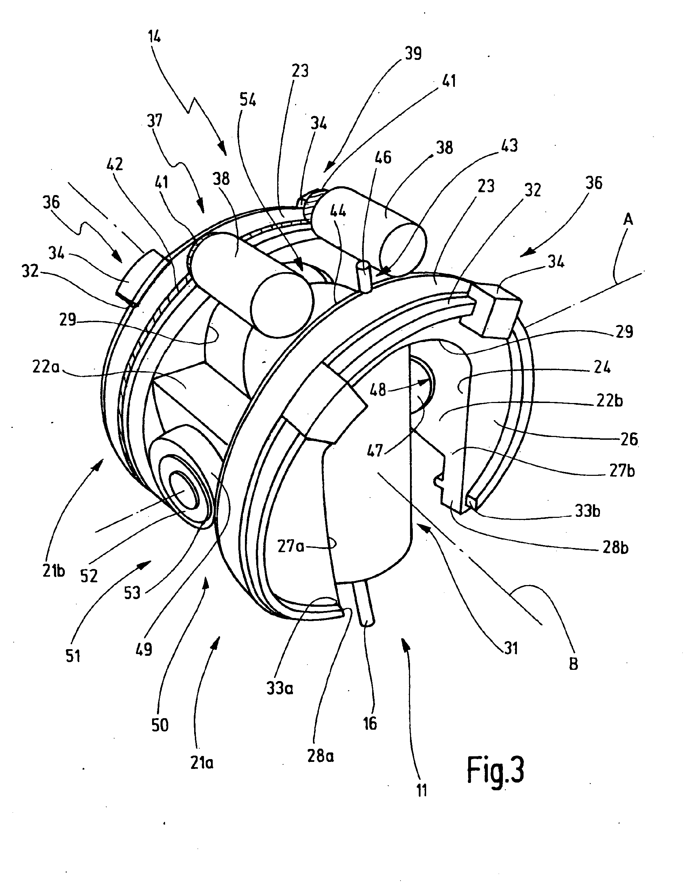

Der erfindungsgemäße Fräskopf 9 ist in größeren Einzelheiten, zum Teil stark schematisiert und in unterschiedlichen Maßstäben in den Fig. 2 und 3 veranschaulicht. Zu dem Fräskopf 9 gehören im Wesentlichen der als Träger dienende Tragbalken 8, ein an dem Tragbalken 8 um eine erste Schwenkachse B schwenkbar gehalterter Schwenkkörper 14 sowie die Frässpindel 11, die in einer Spindelaufnahme 16 auswechselbar angeordnet ist und an ihrem freien Ende ein Werkzeug 17, bspw. ein Fräswerkzeug, trägt. Die Spindelaufnahme 16 ist an dem Schwenkkörper 14 um eine weitere Schwenkachse A schwenkbar gelagert. Die erste Schwenkachse B ist eine horizontale Achse, die senkrecht zu der Z-Richtung und parallel zu der Y-Richtung verläuft. Die zweite Schwenkachse A ist senkrecht zu der B-Achse ausgerichtet und verläuft in der YZ-Ebene. In der in Fig. 1 veranschaulichten Nulllage des Fräskopfes 9, in der das Fräswerkzeug 17 in Z-Richtung senkrecht nach unten ragt, ist die zweite Schwenkachse A parallel zu der Y-Achsenrichtung, senkrecht zu der Z-Achse ausgerichtet. Alle drei Achsen A, B und Z schneiden einander in einem Punkt, der in etwa in der Mitte oder dem Schwerpunkt der Frässpindel 11 liegt.

Der Tragbalken 8 weist ein im Wesentlichen quaderförmiges Gehäuse 18 auf, das in Fig. 3 aus Übersichtlichkeitsgründen weggelassen ist, um die darin angeordneten, nachstehend erläuterten wesentlichen Komponenten zu veranschaulichen. An dem dem Schwenkkörper 14 zugewandten, in den Figuren unteren Ende des Gehäuses 18 sind Gehäusefortsätze 19a, 19b vorgesehen, die den Schwenkkörper 14 von den axialen Seiten, betrachtet in Richtung der B-Achse, geringfügig umgreifen und haltern.

Der Schwenkkörper 14 weist eine im Wesentlichen zylindrische und in Bezug auf durch die Schwenkachsen A und B definierte Mittelebenen symmetrische Form auf. Er enthält zwei in Draufsicht C-förmige Kreisscheibenelemente oder -segmente 21a, 21b, die in Richtung der B-Achse im Abstand parallel und konzentrisch zueinander angeordnet sind, sowie zwei im Wesentlichen quaderförmige Verbindungsstege 22a, 22b, die sich in Richtung der B-Achse zwischen den Scheibenelementen 21a, 21b erstrecken und diese miteinander verbinden und die vorzugsweise im Ganzen einstückig mit den Scheibenelementen 21a, 21b ausgebildet sind. Die Scheibenelemente 21a, 21b weisen jeweils eine äußere zylindrische Umfangsfläche 23, eine radial innere Fläche 24 und eine nach außen gerichtete axiale Stirnfläche 26 auf. Die radial innere Fläche 24 weist zwei Wandungen 27a, 27b auf, die sich von freien Enden 28a, 28b der C-Beine der Scheibenelemente 21a, 21b aus im Abstand und parallel zueinander erstrecken und über eine abgerundete innere Wand 29 miteinander verbunden sind. Die Wandungen 27a, 27b und 29 begrenzen eine Ausnehmung 31, die durch den gesamten Schwenkkörper 14 hindurch verläuft, sich also längs der B-Achse ausgehend von der axialen Stirnfläche 26 eines ersten Scheibenelementes 21a durch dieses hindurch und zwischen den Verbindungsstegen 22a, 22b sowie weiter durch das andere Scheibenelement 21b hindurch bis zu dessen axialen Stirnfläche 26 erstreckt. Die Höhe und Weite der Ausnehmung 31 ist derart gewählt, dass darin die Frässpindel 11 aufgenommen werden kann und sich diese um die zweite Schwenkachse A schwenken lässt. Der senkrechte Abstand zwischen den Wandungen 27a und 27b der inneren Fläche 24 ist also geringfügig größer als die Breite der Spindelaufnahme 16.

An der axialen Stirnfläche 26 jedes Scheibenelementes 21a, 21b ist eine kreisbogensegmentförmige Führungsschiene 32 vorgesehen. Die Führungsschiene 32 verläuft von einem ersten freien Ende 33a aus, das sich in der Nähe des freien Endes 28a eines C-Beins des Scheibenelementes 21a, 21b befindet, längs des Umfangs 23, nahezu bündig mit diesem bis zu einem zweiten freien Ende 33b, das in der Nähe des freien Endes 28b des zweiten C-Beins des Scheibenelementes 21a, 21b angeordnet ist. Der durch die Führungsschiene umspannte Bogensegmentwinkel in Bezug auf einen auf der B-Achse liegenden Mittelpunkt beträgt in etwa 270°. An der Führungsschiene 32 eines jeden Scheibenelementes 21a, 21b sind hier zwei Führungswagen 34 angelenkt, die in Umfangsrichtung voneinander beabstandet an dem Tragbalken 8, insbesondere an den Gehäusefortsätzen 19a bzw. 19b, befestigt sind. Die Führungswagen 34 bilden gemeinsam mit den Führungsschienen 32 eine erfindungsgemäße Bogenführungseinrichtung 36, die eine präzise Bogenbewegung des Schwenkkörpers 14 in Bezug auf den Tragbalken 8 um die erste Schwenkachse B ermöglicht. Der Abstand zwischen den Führungswagen 34, die einer Führungsschiene 32 zugeordnet sind, ist möglichst klein, um einen großen Schwenkbereich zu erzielen, jedoch ausreichend groß, um eine steife Führungsanordnung zu erhalten. Der Winkelabstand zwischen den Führungswagen 34 beträgt hier in etwa 60 bis 90 Grad, während der Außendurchmesser der Führungsschienen 32 oder des Schwenkkörpers 14 in etwa 50 bis 60 cm beträgt.

Zur motorischen Verdrehung des Schwenkkörpers 14 um die erste Schwenkachse B ist eine erste Antriebseinrichtung 37 vorgesehen, die hier zwei um den Umfang des Schwenkkörpers 14 voneinander beabstandete und an dem Trägerbalken 8 befestigte Servomotoren 38 sowie untersetztende Getriebeeinrichtungen 39 aufweist, die die Servomotoren mit dem Schwenkkörper antriebsmäßig verbinden. Hierzu tragen die Servomotoren 38 an ihren hier nicht näher veranschaulichten Antriebswellen jeweils ein Ritzel 41, wobei die Ritzel 41 mit einer auf der Umfangsfläche 23 des Scheibenelementes 21b vorgesehenen, um den Umfang herum verlaufenden gemeinsamen Stirnverzahnung 42 kämmen. Die Verzahnung des Ritzels 41 und die Stirnverzahnung 42 sind vorzugsweise als Schrägverzahnungen ausgebildet. Es können weitere Untersetzungsstufen vorgesehen sein. Mittels einer hier nicht näher veranschaulichten Steuerungseinrichtung kann bewirkt werden, dass die Servomotoren 38 zur Verspannung des Antriebs 37 geringfügig gegeneinander arbeiten.

Zur Erfassung der relativen Winkellage zwischen dem Trägerbalken 8 und dem Schwenkkörper 14 ist eine erste Messeinrichtung 43 vorgesehen. Die Messeinrichtung 43 weist hier ein an dem Scheibenelement 21a angeordnetes Maßband, das um die Umfangsfläche 23 herum verläuft, und einen an dem Träger befestigten Lesekopf 46 auf, der in geringem Abstand zu dem Maßband 44 angeordnet ist, um die Winkellage in Bezug auf die B-Achse zu erfassen. Die erfassten Messsignale werden über hier nicht näher veranschaulichte Leitungen, die ebenfalls wie Energieversorgungsleitungen für die Antriebseinrichtungen durch den Träger 8 verlaufen, an die Steuerungseinrichtung geliefert, die die Positionierung in der B-Achse und der A-Achse steuert.

Die Frässpindel 11 ist auf einer Welle 47 drehfest angebracht, die in den Verbindungsstegen 22a, 22b des Schwenkkörpers 14 drehbar aufgenommen ist. Hierzu weisen die Verbindungsstege 22a, 22b zu der Schwenkachse A koaxiale Durchgangsbohrungen 48 mit Lagermitteln, bspw. Kreuzrollenlagern, zur Lagerung der Welle 47 auf. An beiden Enden der Welle 47 sind zum direkten Antrieb und zur Steuerung der Drehung der Welle 47 um die zweite Schwenkachse A Torquemotoren, also in etwa für hohe Drehmomente ausgelegte Servomotoren 49 ohne Getriebe, vorgesehen, die eine zweite Antriebseinrichtung 50 bilden. Außerdem ist zwischen der Welle 47 und dem Schwenkkörper 14 eine zweite Winkelmesseinrichtung 51 vorgesehen, die hier lediglich zu Anschauungszwecken in Form eines an der Welle 47 befestigten Drehgebers 52 und eines an dem Scheibenelement 21a befestigten Drehaufnehmers 53 ausgebildet ist und die dazu dient, die relative Winkelstellung der Welle 47 und der daran befestigten Frässpindel 11 um die A-Achse zu erfassen und an die Steuerungseinrichtung zu übermitteln.

Wie aus Fig. 3 ferner hervorgeht, ist zwischen den Verbindungsstegen 22a, 22b und den Scheibenelementen 21a, 21b im oberen Bereich des Schwenkkörpers 14 eine Durchgangsöffnung 54 ausgebildet, die von außen bis zu der Ausnehmung 31 führt. Die Durchgangsöffnung 54 ermöglicht eine Durchführung von Energieversorgungs-, Steuerungs- und sonstigen Signalleitungen zu den Antriebseinrichtungen 37, 50, den Winkelmesseinrichtungen 43, 51 und der Frässpindel 11. Vorteilhafterweise ist auch die Masse des bewegbaren Schwenkkörpers 14 reduziert, so dass Antriebsenergie eingespart werden kann.

Die insoweit beschriebene erfindungsgemäße Fräsmaschine 1 mit dem erfindungsgemäßen Fräskopf 9 ist zur simultanen 5-Achsen-Bearbeitung von Werkstückoberflächen und insbesondere zur Bearbeitung von großen 3D-Teilen in der Automobil-, Luft- und Raumfahrtindustrie mit hoher Bearbeitungsgenauigkeit eingerichtet. Sie arbeitet wie folgt:

Im Betrieb wird ein zu bearbeitendes Werkstück in dem Messraum 13 auf dem Maschinentisch 12 positioniert. Eine numerische Steuerung der Fräsmaschine steuert die den linearen Achsen X, Y und Z zugeordneten Antriebe geeignet an, um den Fräskopf 11 in die jeweils zum Fräsen geeignete Position zu überführen. Die gesamte Maschinenstruktur mit den standfesten Seitenständern 2, 3, dem struktursteifen Portal 4, den Linearantrieben etc. ist für hohe dynamische Steifigkeit ausgelegt. Es lassen sich somit sehr schnelle Vorschübe und hohe Achsbeschleunigungen von sogar mehr als 5 m/s² erreichen, ohne dass bei den schnellen Vorschüben und hohen Lastwechseln wesentliche Erschütterungen oder Schwingungen hervorgerufen werden.

Gleichzeitig mit der Steuerung der vorgenannte Linearantriebe aktiviert die Steuerung die Servomotoren 38 und die Torquemotoren 49, um eine Drehung des Schwenkkörpers 14 in Bezug auf den Träger 8 um die erste Schwenkachse B sowie eine Drehung der Welle 47 in Bezug auf den Schwenkkörper 14 um die zweite Schwenkachse A und somit eine gesteuerte Positionierung der Frässpindel 11 zu bewirken. Während seiner Verschwenkung wird der Schwenkkörper 14 durch die Bogenführungseinrichtung 36 präzise geführt. Die beiden Führungsschienen 32 mit den zugehörigen Führungswagen 34 sorgen für eine steife und spielfreie Lagerung und Führung. Der verhältnismäßig große Bogensegmentwinkel der Führungsschienen 32 und der geeignet gewählte Abstand zwischen den Führungswagen 34 ermöglichen einen Schwenkwinkel von bis zu wenigstens ± 90°, evtl. sogar mehr als ± 100°, in Bezug auf die Nulllage um die erste Schwenkachse B. Außerdem kahn die Frässpindel 11 bedingt durch die Gestalt des Schwenkkörpers 14, insbesondere die Ausnehmung 31, um wenigstens ± 90°, sogar um mehr als ± 100° in Bezug auf die Nulllage um die zweite Schwenkachse A verschwenkt werden. Dabei kann die Frässpindel 11 die Schwenkebenen der Führungsschienen 23 bzgl. der Schwenkachse B durchdringen. Bei diesen Schwenkbereichen lassen sich sehr komplexe Oberflächen und Details mit sehr guter Qualität fräsen.

Durch die Verwendung der beiden zueinander senkrechten Schwenkachsen A und B kann das Fräswerkzeug 17 auf direktem Wege in die nächst erforderliche Bearbeitungslage überführt werden. Ein Zurückdrehen um eine Achse, wie bei herkömmlichen Fräsköpfen mit einer Drehachse C und einer Schwenkachse A, ist hier nicht erforderlich. Die Bearbeitungsgeschwindigkeit kann deutlich erhöht werden. Ferner ist es möglich, eine elektronische Orientierungsfehlerkompensation während des Bearbeitungsvorgangs durchzuführen. Hierzu wird der Messraum 13 in einem Kalibrierungsvorgang nach Montage des Fräskopfes 9 an der Portalfräsmaschine 1 bei unterschiedlichen Winkellagen des Fräswerkzeugs 17 möglichst vollständig vermessen, um die Abweichungen zwischen der Ist- und der Solllage zu erfassen und in der Steuerung abzuspeichern. Während eines Fräsvorgangs werden diese Abweichungen automatisch zur Lagekorrektur herangezogen. Dadurch können Anforderungen an die Genauigkeit bei der Herstellung und Montage von Bauteilen der Fräsmaschine 1 im Allgemeinen und des Fräskopfes 9 im Speziellen unter Aufrechterhaltung einer hohen Bearbeitungspräzision gesenkt werden, wodurch Kosten deutlich reduziert werden können.

Mit der erfindungsgemäßen Ausgestaltung kann das Gewicht des Fräskopfes 9 deutlich reduziert werden, was höhere Beschleunigungen ermöglicht und Schwingungsneigungen verringert. Ferner kann eine deutlich geringere Dimension und Störkontur des Fräskopfes 11 erreicht werden. Durch die Bogenführungseinrichtung 36 braucht der Tragbalken 8 den Schwenkkörper 14 nur geringfügig zu umgreifen. Sperrige Gabelarme zur Lagerung von Schwenkwellen sowie ineinander verschachtelte Gehäuseteile herkömmlicher Anordnungen werden vermieden. Es ist ein kompakter Fräskopf 11 geschaffen, der das Fräsen sehr feiner Konturen auf engem Raum ermöglicht.

Durch gezielte Maßnahmen, wie eine elektronisch spielfreie Verspannung der Getriebeeinrichtungen 39, das Vorsehen von Torquemotoren zur Verschwenkung der Frässpindel 11 um die A-Achse, die konstruktive Ausgestaltung der Elemente, die präzise und spielfreie Bogenführungseinrichtung 36, das geringe Bauvolumen und Gewicht des Fräskopfes 9 etc., ist eine Grundlage für eine hohe dynamische Steifigkeit und Bearbeitungsgenauigkeit bei hoher Sicherheit, Wirtschaftlichkeit und Langlebigkeit der Fräsmaschine 1 geschaffen.

Im Rahmen der Erfindung sind zahlreiche Variationen und Modifikationen der vorstehend beschriebenen Ausführungsform möglich. Bspw. kann der Fräskopf 9 auch längs einer horizontalen Z-Richtung verfahrbar sein. Ferner kann sich die Form des Schwenkkörpers 14 von der veranschaulichten Form unterscheiden, die im Hinblick auf eine möglichst geringe Masse und Bauvolumengröße optimiert ist. Die Führungsschiene 32 könnte auch an der Umfangsfläche 23 des Schwenkkörpers 14 angeordnet und von Führungswagen des Tragbalkens 8 untergriffen sein. Prinzipiell ist auch eine Ausbildung der Bogenführungseinrichtung 36 mit lediglich einer Führungsschiene 32 möglich. Umgekehrt kann zusätzlich zu der Bogenführungseinrichtung 36 wenigstens eine weitere Bogenführungseinrichtung bspw. in paralleler Anordnung vorgesehen sein. Obwohl dies aus den Figuren nicht hervorgeht, sind die Führungswagen 34 vorzugsweise über einen speziellen Kugelumlaufmechanismus oder dgl. an der Führungsschiene 32 gelagert, um eine leichtgängige Bewegung zu ermöglichen. Statt der beiden Servomotoren 38 könnte auch ein einzelner Motor mit einer Getriebeeinrichtung vorgesehen sein, die ein Räderwerk mit mehreren Untersetzungsstufen aufweisen kann. Es kann ein mechanisch spielfrei verspanntes Zahnradgetriebe verwendet werden. Ebenfalls können die Torquemotoren 49 durch Servomotoren mit Zahnradgetriebe ersetzt werden. Mit den Torquemotoren lässt sich jedoch die Dynamik des Fräskopfes 9 deutlich vergrößern. Als Winkelmesseinrichtungen 43, 51 können beliebige, mechanisch, optisch, magnetisch oder kapazitiv arbeitende Messsysteme verwendet werden, oder die erforderlichen Winkelstellungen können auch indirekt aus der relativen Winkellage bspw. von Antriebswellen der Motoren oder dgl. abgeleitet werden.

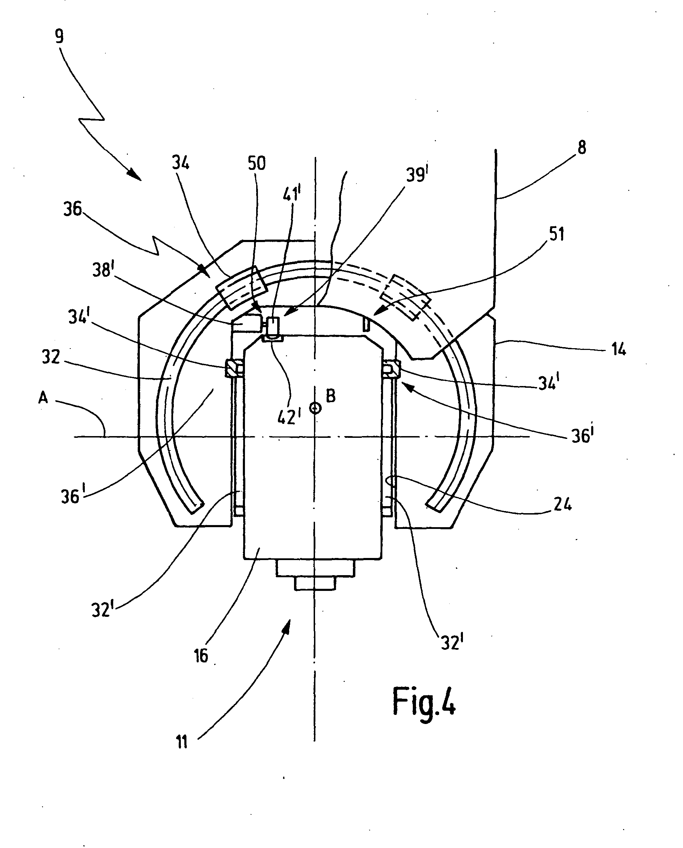

Eine weitere Ausführungsform der vorliegenden Erfindung ist in einer stark vereinfachten Prinzipdarstellung in Fig. 4 veranschaulicht. Soweit Übereinstimmung in Bau und/oder Funktion besteht, wird unter Verwendung gleicher Bezugszeichen auf die vorstehende Beschreibung verwiesen. Die in, Fig. 4 veranschaulichte Ausführungsform unterscheidet sich von derjenigen nach Fig. 1 bis 3 insbesondere dadurch, dass hier eine Bogenführungseinrichtung 36' auch zur Führung der Frässpindel 11 bei ihrer Verschwenkung um die zweite Schwenkachse A vorgesehen ist. Hierzu ist die Spindelaufnahme 16 der Frässpindel 11 im Wesentlichen zylindrisch ausgebildet und weist an ihren der inneren Fläche 24 des Schwenkkörpers 14 zugewandten Stirnseiten ring- oder kreisbogensegmentförmige Führungsschienen 32' auf, mit denen an dem Schwenkkörper 14 befestigte Führungswagen 34' zusammenwirken. Die zweite Antriebseinrichtung 50 kann nach Vorbild der ersten Antriebseinrichtung 37 durch an dem Schwenkkörper befestigte Servomotoren 38' und Getriebeeinrichtungen 39' gebildet sein, die an der Antriebswelle der Servomotoren 38 befestigte Ritzel und eine an der Umfangsfläche der Spindelaufnahme 16 vorgesehene schrägverzahnte Stirnverzahnung enthalten. Abgesehen von der präzisen Lagerung und Führung mittels der weiteren Bogenführungseinrichtung 36' funktioniert der Fräskopf 1 nach Fig. 4 in gleicher Weise wie derjenige nach Fig. 1 bis 3, so dass zur Vermeidung von Wiederholungen die vorstehende Beschreibung der Funktionsweise und Vorteile entsprechend gilt. Eine Bogenführungseinrichtung 36' könnte prinzipiell auch lediglich zwischen dem Schwenkkörper 14 und der Frässpindel 11 wirkungsmäßig eingefügt sein.

Obwohl hier eine Portalfräsmaschine 1 und ein Fräskopf 9 für die spezielle Anwendung zum Fräsen von Oberflächenstrukturen veranschaulicht sind, versteht es sich, dass die Fräsmaschine auch in anderer Bauweise ausgeführt oder als Werkzeugmaschine für andere Umformanwendungen, bspw. zum Bohren, vorgesehen sein kann. Insofern bildet der Fräskopf 1 allgemein eine Werkzeugkopfeinheit 1, die eine geeignete Werkzeugmaschinenspindel 11 um die beiden Schwenkachsen A und B schwenkbar trägt. Es ist selbstverständlich, dass im Hinblick auf die hier erläuterte spezielle Vorrichtung keine Einschränkung des Schutzbereichs beabsichtigt oder vorgenommen werden sollte. Vielmehr sollen die beigefügten Ansprüche sämtliche Modifikationen umfassen, wie sie in den Umfang der Ansprüche fallen.

Eine zur Großteilebearbeitung eingerichtete Fräsmaschine 1 weist einen Fräskopf 9 auf, zu dem ein längs einer Längsachse Z verfahrbarer Träger 8, ein an dem Träger 8 über eine Bogenführungseinrichtung 36 um eine zu der Längsachse Z senkrechte erste Schwenkachse B schwenkbar gelagerter und geführter Schwenkkörper 14 und eine an dem Schwenkkörper 14 um eine zu der Schwenkachse B senkrechte zweite Schwenkachse A schwenkbar gelagerte Motorfrässpindel 11 gehören. Die Drehungen des Schwenkkörpers 14 und der Frässpindel 11 sind durch den Schwenkachsen A, B zugeordnete Antriebseinrichtungen 37, 50 gesteuert. Die Bogenführungseinrichtung 36 weist an dem Träger 8 befestigte Führungswagen 34 und eine an dem Schwenkkörper 14 befestigte kreisbogensegmentförmige Führungsschiene 32 auf, die einen Schwenkbereich um die erste Schwenkachse B von mindestens etwa 180° ermöglichen. Eine in dem Schwenkkörper 14 vorgesehene Ausnehmung 31 zur Unterbringung der Frässpindel 11 ermöglicht einen Schwenkbereich von mindestens etwa 180° um die zweite Schwenkachse A. Der Fräskopf 9 weist einen kompakten und leichten Aufbau mit einer reduzierten Störkontur auf, der die Herstellung komplexer Oberflächen mit hoher Qualität in kurzer Bearbeitungszeit ermöglicht.

## Patentansprüche

1. Werkzeugkopfeinheit:für spanabhebende Bearbeitung von Werkstücken,
mit einem Träger (8), der eine Längsachse (Z) definiert,
mit einem an dem Träger (8) gelagerten Schwenkkörper (14), der mittels einer ersten Antriebseinrichtung (37) in Bezug auf den Träger (8) um eine erste Schwenkachse (B) verschwenkbar ist, und
mit einer an dem Schwenkkörper (14) gelagerten Werkzeugmaschinenspindel (11), die an ihrem freien Ende ein Werkzeug (17) trägt und die mittels einer zweiten Antriebseinrichtung (50) in Bezug auf den Schwenkkörper (14) um eine zweite Schwenkachse (A) schwenkbar ist,
wobei der Schwenkkörper (14) einen C-förmigen Grundkörper mit einer Umfangsfläche (23), axialen Stirnflächen (26) und einer in der Umfangsfläche (23) vorgesehenen Ausnehmung (31) aufweist, die zwischen den C-Beinen des Grundkörpers durch den gesamten Schwenkkörper (14) hindurch verläuft und zu den Stirnflächen (26) hin offen ist,
wobei zur schwenkbaren Lagerung und Führung des Schwenkkörpers (14) in Bezug auf den Träger (8) ausschließlich wenigstens eine dazwischen wirksame Bogenführungseinrichtung (36) vorgesehen ist, die längs des Umfangs des Grundkörpers des schwenkkörpers (14) angeordnet ist, und
wobei die Werkzeugmaschinenspindel (11) in dem Schwenkkörper (14) an beiden C-Beinen des Grundkörpers drehbar gelagert und wenigstens abschnittsweise zwischen den C-Beinen des Grundkörpers in der Ausnehmung (31) untergebracht ist, wobei das Werkzeug (17) in einer entlang der Längsachse (Z) ausgerichteten Nulllage über die Umfangsfläche (23) hinausragt und bei einer Verschwenkung um die zweite Schwenkachse (A) über die axialen Stirnflächen (26) des Schwenkkörpers (14) hinausragen kann.

2. Werkzeugkopfeinheit nach Anspruch 1, **dadurch gekennzeichnet, dass** sie eine Fräskopfeinheit mit einer Frässpindel (11), vorzugsweise einer Motorfrässpindel, bildet.

3. Werkzeugkopfeinheit nach Anspruch 1, **dadurch gekennzeichnet, dass** die erste Schwenkachse (B) senkrecht zu der Längsachse (Z) ausgerichtet ist, die zweite Schwenkachse (A) senkrecht zu der ersten Schwenkachse (B) ausgerichtet ist und die Längsachse (Z), die erste Schwenkachse (B) und die zweite Schwenkachse (A) einander in etwa im Zentrum der Frässpindel (11) schneiden.

4. Werkzeugkopfeinheit nach Anspruch 1, **dadurch gekennzeichnet, dass** die Bogenführuhgseinrichtung (36; 36') wenigstens eine kreisbogenförmige Führungsschiene (32; 32'), die entweder an dem Schwenkkörper 14 und/oder an der Werkzeugmaschinenspindel (11) angebracht ist, und wenigstens einen an der Führungsschiene (32; 32') gelagerten Führungswagen (34; 34') aufweist, der entweder an dem Träger (8) und/oder an dem Schwenkkörper (14) befestigt ist.

5. Werkzeugkopfeinheit nach Anspruch 4, **dadurch gekennzeichnet, dass** die Bogenführungseinrichtung (36; 36') zur schwenkbaren Lagerung und Führung eines Elementes (14; 11) in Bezug auf ein anderes Element (8; 14) zwei Führungsschienen (32; 32') aufweist, die um die jeweilige Schwenkachse (B; A) herum koaxial sowie axial im Abstand und parallel zueinander verlaufen.

6. Werkzeugkopfeinheit nach Anspruch 4 oder 5, **dadurch gekennzeichnet, dass** jeder Führungsschiene (32; 32') zwei oder mehrere im Abstand zueinander angeordnete Führungswagen (34; 34') zugeordnet sind.

7. Werkzeugkopfeinheit nach Anspruch 4 oder 5, **dadurch gekennzeichnet, dass** die Führungsschiene (32; 32') in Form eines Kreisbogensegmentes gestaltet ist, das über einen Bogensegmentwinkel verläuft.

8. Werkzeugkopfeinheit nach Anspruch 1, **dadurch gekennzeichnet, dass** die Bogenführungseinrichtung (36; 36') dazu eingerichtet ist, eine Schwenkbewegung des Schwenkkörpers (14) bzw. der Werkzeugmaschinenspindel (11) um wenigstens etwa 180° zu ermöglichen.

9. Werkzeugkopfeinheit nach Anspruch 7 und 8, **dadurch gekennzeichnet, dass** der Bogehsegmentwinkel wenigstens 200°, vorzugsweise zwischen 220° und 270°, beträgt.

10. Werkzeugkopfeinheit nach Anspruch 7 und 8, **dadurch gekennzeichnet, dass** der senkrechte Abstand zwischen freien Enden (32a, 32b) der kreisbogensegmentförmigen Führungsschiene (32, 32') größer ist als die in Richtung des senkrechten Abstands gemessene Dimension der Werkzeugmaschinenspindel (11).

11. Werkzeugkopfeinheit nach Anspruch 4, **dadurch gekennzeichnet, dass** die Führungsschiene (32; 32') einteilig ausgebildet ist.

12. Werkzeugkopfeinheit nach Anspruch 1, **dadurch gekennzeichnet, dass** der Träger (14) in Form eines länglichen Trägerbalkens (8) ausgebildet ist, der an seinem dem Schwenkkörper (14) zugewandten Ende zwei Trägerfortsätze (19a, 19b) aufweist, die das Schwenkelement (14) geringfügig umgreifen und Führungswagen (34) der Bogenführungseinrichtung (36) tragen.

13. Werkzeugkopfeinheit nach Anspruch 12, **dadurch gekennzeichnet, dass** die Trägerfortsätze (19a, 19b) eine Ausdehnung in Längsrichtung (Z) aufweisen, die einen Bruchteil der Längserstreckung des Schwenkelementes (14) beträgt.

14. Werkzeugkopfeinheit nach Anspruch 1, **dadurch gekennzeichnet, dass** der Schwenkkörper (14) einen im Wesentlichen zylindrischen Grundkörper aufweist, an dessen wenigstens einer axialen Stirnfläche (26) die Bogenführungseinrichtung (36) angeordnet ist.

15. Werkzeugkopfeinheit nach Anspruch 1, **dadurch gekennzeichnet, dass** der Schwenkkörper (14) zwei in Richtung der ersten Schwenkachse (B) parallel und im Abstand zueinander angeordnete C-förmige Scheibenelemente (21a, 21b) aufweist, die durch zwei Verbindungsstege (22a, 22b) miteinander verbunden sind, die in Richtung der zweiten Schwenkachse (A) parallel zueinander verlaufen.

16. Werkzeugkopfeinheit nach Anspruch 15, **dadurch gekennzeichnet, dass** die Scheibenelemente (21a, 21b) an ihren Stirnflächen (26) Führungsschienen (32) der Bogenführungseinrichtung (36) tragen, die vorzugsweise im Wesentlichen den gleichen Außendurchmesser wie die Scheibenelemente (21a, 21b) aufweisen und die an an dem Träger (8) befestigten Führungswagen (34) der Bogenführungseinrichtung (36) gelagert sind.

17. Werkzeugkopfeinheit nach Anspruch 1, **dadurch gekennzeichnet, dass** die erste Antriebseinrichtung (37) einen an dem Träger (8) befestigten Motor (38), vorzugsweise einen Servomotor, sowie eine zwischen dem Träger (8) und dem Schwenkkörper (14) wirkungsmäßig eingefügte untersetzende Getriebeeinrichtung (39) aufweist.

18. Werkzeugkopfeinheit nach Anspruch 17, **dadurch gekennzeichnet, dass** die Getriebeeinrichtung (39) eine an einer Umfangsfläche (23) des Schwenkkörpers (14) vorzugsweise als Schrägverzahnung ausgebildete Stirnverzahnung (42) aufweist.

19. Werkzeugkopfeinheit nach Anspruch 17, **dadurch gekennzeichnet, dass** die erste Antriebseinrichtung (37) einen elektronisch verspannten Antrieb bildet.

20. Werkzeugkopfeinheit nach Anspruch 1, **dadurch gekennzeichnet, dass** eine Messeinrichtung (43) zur Erfassung des relativen Schwenkwinkels zwischen dem Träger (8) und dem Schwenkkörper (14) vorgesehen ist.

21. Werkzeugkopfeinheit nach Anspruch 1, **dadurch gekennzeichnet, dass** in dem Schwenkkörper (14) eine die zweite Schwenkachse (A) definierende Welle (47) drehbar gelagert ist, wobei auf der Welle (47) die Werkzeugmaschinenspindel (11) befestigt ist.

22. Werkzeugkopfeinheit nach Anspruch 1, **dadurch gekennzeichnet, dass** die zweite Antriebseinrichtung (50) einen Torquemotor (49) zum direkten Antrieb und zur Steuerung der Drehung der Werkzeugmaschinenspindel (11) aufweist.

23. Werkzeugkopfeinheit nach Anspruch 1, **dadurch gekennzeichnet, dass** eine zweite Messeinrichtung (51) zur Erfassung des relativen Schwenkwinkels zwischen der Werkzeugmaschinenspindel (11) und dem Schwenkkörper (14) vorgesehen ist.

24. Werkzeugkopfeinheit nach Anspruch 1, **dadurch gekennzeichnet, dass** die Werkzeugmaschinenspindel (11) in einer Spindelaufnahme (16) lösbar angeordnet ist.

25. Werkzeugkopfeinheit;nach einem beliebigen der vorhergehenden Ansprüche, **dadurch gekennzeichnet, dass** eine Bogenführungseinrichung (36') wirkungsmäßig zwischen dem Schwenkkörper (14) und der Werkzeugmaschinenspindel (11) eingefügt ist.

26. Werkzeugmaschine, insbesondere Fräsmaschine, mit einem in einem dreidimensionalen Messraum positionierbaren Trägerbalken (8), der eine Werkzeugkopfeinheit (9), insbesondere Fräskopfeinheit, mit den Merkmalen wenigstens eines der vorhergehenden Ansprüche aufweist.

## Claims

1. Tool head unit for machining workpieces,
with a support (8), which defines a longitudinal axis (Z),
with a pivoting body (14), which is mounted on the support (8) and can be pivoted relative to the support (8) around a first pivot axis (B) by means of a first drive means (37), and
with a machine tool spindle (11), which is mounted on the pivoting body (14), carries a tool (17) at its free end and can be pivoted relative to the pivoting body (14) around a second pivot axis (A) by means of a second drive means (50),
wherein the pivoting body (14) has a C-shaped base body with a peripheral surface (23), axial faces (26) and a recess (31), which is provided in the peripheral surface (23), runs between the legs of the C of the base body through the entire pivoting body (14) and is open towards the faces (26),
wherein for mounting and guiding the pivoting body (14) to pivot relative to the support (8) only at least one curved guide means (36) active between these is provided, which is arranged along the periphery of the base body of the pivoting body (14), and
wherein the machine tool spindle (11) is rotatably mounted in the pivoting body (14) at the two legs of the C of the base body and is accommodated in the recess (31) at least in sections between the legs of the C of the base body, wherein the tool (17) projects beyond the peripheral surface (23) in a zero position aligned along the longitudinal axis (Z) and can project beyond the axial faces (26) of the pivoting body (14) during a pivoting movement around the second pivot axis (A).

2. Tool head unit according to claim 1**, characterised in that** it forms a milling head unit with a milling spindle (11), preferably a motor milling spindle.

3. Tool head unit according to claim 1, **characterised in that** the first pivot axis (B) is oriented perpendicularly to the longitudinal axis (Z), the second pivot axis (A) is oriented perpendicularly to the first pivot axis (B) and the longitudinal axis (Z), the first pivot axis (B) and the second pivot axis (A) intersect one another approximately in the centre of the milling spindle (11).

4. Tool head unit according to claim 1, **characterised in that** the curved guide means (36; 36') has at least one circular arc-shaped guide rail (32; 32'), which is attached either to the pivoting body (14) and/or to the machine tool spindle (11), and at least one guide carriage (34; 34'), which is mounted on the guide rail (32; 32') and fastened either to the support (8) and/or to the pivoting body (14).

5. Tool head unit according to claim 4, **characterised in that** for mounting and guiding an element (14; 11) to pivot relative to another element (8; 14), the curved guide means (36; 36') has two guide rails (32; 32'), which run coaxially as well as axially spaced from one another and parallel to one another around the respective pivot axis (B; A).

6. Tool head unit according to claim 4 or 5, **characterised in that** each guide rail (32; 32') has two or more associated guide carriages (34; 34') spaced from one another.

7. Tool head unit according to claim 4 or 5, **characterised in that** the guide rail (32; 32') is configured in the form of a circular arc segment, which extends over an arc segment angle.

8. Tool head unit according to claim 1, **characterised in that** the curved guide means (36; 36') is arranged to allow a pivoting movement of the pivoting body (14) or the machine tool spindle (11) around at least about 180°.

9. Tool head unit according to claim 7 and 8, **characterised in that** the arc segment angle amounts to at least 200°, preferably between 220° and 270°.

10. Tool head unit according to claim 7 and 8, **characterised in that** the perpendicular spacing between free ends (32a, 32b) of the circular arc segment-shaped guide rail (32, 32') is larger than the dimension of the machine tool spindle (11) measured in the direction of the perpendicular spacing.

11. Tool head unit according to claim 4, **characterised in that** the guide rail (32; 32') is configured in one piece.

12. Tool head unit according to claim 1, **characterised in that** the support (14) is configured in the form of an elongated support beam (8), which at its end facing the pivoting body (14) has two support extensions (19a, 19b), which engage to a small degree around the pivoting element (14) and support the guide carriage (34) of the curved guide means (36).

13. Tool head unit according to claim 12, **characterised in that** the support extensions (19a, 19b) have an extent in the longitudinal direction (Z), which amounts to a fraction of the longitudinal extent of the pivoting element (14).

14. Tool head unit according to claim 1, **characterised in that** the pivoting body (14) has a substantially cylindrical base body, on at least one axial face (26) of which the curved guide means (36) is arranged.

15. Tool head unit according to claim 1, **characterised in that** the pivoting body (14) has two C-shaped plate elements (21a, 21 b), which are spaced parallel to one another in the direction of the first pivot axis (B) and are connected to one another by two connecting webs (22a, 22b), which run parallel to one another in the direction of the second pivot axis (A).

16. Tool head unit according to claim 15, **characterised in that** the plate elements (21a, 12b) support guide rails (32) of the curved guide means (36) on their faces (26), and said guide rails preferably have substantially the same outside diameter as the plate elements (21a, 21b) and are mounted on guide carriages (34) of the curved guide means (36) secured to the support (8).

17. Tool head unit according to claim 1, **characterised in that** the first drive means (37) has a motor (38), preferably a servomotor, secured to the support (8) and also a reducing gear unit (39) operatively inserted between the support (8) and the pivoting body (14).

18. Tool head unit according to claim 17, **characterised in that** the gear unit (39) has a spur tooth system (42) preferably configured as a helical gearing on the peripheral surface (23) of the pivoting body (14).

19. Tool head unit according to claim 17, **characterised in that** the first drive means (37) forms an electronically controlled drive.

20. Tool head unit according to claim 1, **characterised in that** a measuring means (43) is provided for detection of the relative pivot angle between the support (8) and the pivoting body (14).

21. Tool head unit according to claim 1, **characterised in that** a shaft (47) defining the second pivot axis (A) is rotatably mounted in the pivoting body (14), wherein the machine tool spindle (11) is secured to the shaft (47).

22. Tool head unit according to claim 1, **characterised in that** the second drive means (50) has a torque motor (49) for the direct drive and for control of the rotation of the machine tool spindle (11).

23. Tool head unit according to claim 1, **characterised in that** a second measuring means (51) is provided for detection of the relative pivot angle between the machine tool spindle (11) and the pivoting body (14).

24. Tool head unit according to claim 1, **characterised in that** the machine tool spindle (11) is detachably arranged in a spindle holder (16).

25. Tool head unit according to any one of the preceding claims, **characterised in that** a curved guide means (36') is operatively inserted between the pivoting body (14) and the machine tool spindle (11).

26. Machine tool, in particular milling machine, with a support beam (8), which can be positioned in a three-dimensional measurement space and has a tool head unit (9), in particular a milling head unit, with the features of at least one of the preceding claims.

## Revendications

1. Unité à tête d'outil pour l'usinage de pièces par enlèvement de copeaux, comprenant
. un support (8) qui définit un axe longitudinal (2),
. un corps basculant (14) monté sur le support (8) et qui, par l'intermédiaire d'un premier dispositif d'entraînement (37) peut basculer par rapport au support (8) autour d'un premier axe de basculement (B),
. montée sur le corps basculant (14), une broche de machine-outil (11) qui porte à son extrémité libre un outil (17) et qui, par l'intermédiaire d'un second dispositif d'entraînement (50) peut basculer par rapport au corps basculant (14) autour d'un second axe de basculement (A),
étant précisé que
. le corps basculant (14) possède un corps de base en forme de C avec une surface périphérique (23), des faces frontales axiales (26) et dans la surface périphérique (23), un évidement (31) qui traverse tout le corps basculant (14) entre les jambes en C du corps de base pour s'ouvrir sur les faces frontales (26),
. pour assurer le montage basculant et le guidage du corps basculant (14) par rapport au support (8), il est prévu, agissant entre ceux-ci, exclusivement au moins un dispositif de guidage en arc, disposé le long de la périphérie du corps de base du corps basculant (14),
. la broche de machine-outil (11) est montée dans le corps basculant (14), en rotation le long des deux jambes en C du corps de base, en étant au moins localement disposée entre les jambes dans l'évidement (31), et l'outil (17), quand il est en position zéro orientée selon l'axe longitudinal (2), dépasse la surface périphérique (23) et peut, en basculant autour du second axe de basculement (A) dépasser les faces frontales axiales (26) du corps basculant (14).

2. Unité à tête d'outil selon la revendication 1, **caractérisée en ce qu'**elle constitue une unité à tête de fraisage équipée d'une broche de fraisage (11), de préférence une broche de fraisage motorisée.

3. Unité à tête d'outil selon la revendication 1, **caractérisée en ce que** le premier axe de basculement (B) est orienté perpendiculairement à l'axe longitudinal (Z), le second axe de basculement (A) est orienté perpendiculairement au premier axe de basculement (B) et les deux axes de basculement (B) et (A) se coupent à peu près au centre de la broche de fraisage (11).

4. Unité à tête d'outil selon la revendication 1, **caractérisée en ce que** le dispositif de guidage en arc (36 ; 36') présente au moins un rail de guidage (32 ; 32') en forme d'arc qui est monté sur le corps basculant (14) et/ou sur la broche de machine-outil (11), ainsi qu'au moins un chariot de guidage (34 ; 34') qui est monté sur le rail de guidage (32 ; 32') et qui est fixé sur le support (8) et/ou sur le corps basculant (14).

5. Unité à tête d'outil selon la revendication 4, **caractérisée en ce que** le dispositif de guidage en arc (36 ; 36'), pour assurer le montage basculant et le guidage d'un élément (14 ; 11) par rapport à un autre élément (8 ; 14), présente deux rails de guidage (32 ; 32') qui sont coaxiaux autour des axes de basculement (B ; A), en étant espacés axialement et parallèles l'un à l'autre.

6. Unité à tête d'outil selon la revendication 4 ou 5, **caractérisée en ce qu'**à chaque rail de guidage (32 ; 32') sont associés des chariots de guidage (34 ; 34') espacés les uns des autres et au nombre de deux ou plus.

7. Unité à tête d'outil selon la revendication 4 ou 5, **caractérisée en ce que** le rail de guidage (32 ; 32') a la forme d'un segment d'arc de cercle couvrant un certain angle au centre.

8. Unité à tête d'outil selon la revendication 1, **caractérisée en ce que** le dispositif de guidage en arc (36 ; 36') est conçu de manière à permettre au corps basculant (14) et à la broche de machine-outil (11) de basculer d'au moins 180°.

9. Unité à tête d'outil selon les revendications 7 et 8, **caractérisée en ce que** l'angle de couverture de segment d'arc de cercle est d'au moins 200°, et il est compris de préférence entre 220° et 270°.

10. Unité à tête d'outil selon les revendications 7 et 8, **caractérisée en ce que** l'espacement vertical entre les extrémités libres (32a, 32b) du rail de guidage (32 ; 32') en forme de segment d'arc de cercle est supérieur à la dimension de la broche de machine-outil (11) mesurée également en direction verticale.

11. Unité à tête d'outil selon la revendication 4, **caractérisée en ce que** le rail de guidage (32 ; 32') est monobloc.

12. Unité à tête d'outil selon la revendication 1, **caractérisée en ce que** le support (8) a la forme d'une poutre porteuse allongée (18) qui, à son extrémité en regard du corps basculant (14), présente deux appendices porteurs (19a, 19b) qui entourent légèrement l'élément basculant (14) et portent le chariot de guidage (34) du dispositif de guidage en arc (36).

13. Unité à tête d'outil selon la revendication 12, **caractérisée en ce que** les appendices porteurs (19a, 19b) présentent en direction longitudinale (Z) une dimension qui est une fraction de la dimension longitudinale de l'élément basculant (14).

14. Unité à tête d'outil selon la revendication 1, **caractérisée en ce que** le corps basculant (14) a un corps de base essentiellement cylindrique et sur au moins une face frontale axiale (26) de ce corps est monté le dispositif de guidage en arc (36).

15. Unité à tête d'outil selon la revendication 1, **caractérisée en ce que** le corps basculant (14) présente deux éléments de disque (21a, 21b) en forme de C, parallèles et espacés l'un de l'autre, qui sont reliés par deux tiges de liaison (22a, 22b) parallèles au second axe de basculement (A).

16. Unité à tête d'outil selon la revendication 15, **caractérisée en ce que** les éléments de disque (21a, 21b) portent sur leurs faces frontales (26) des rails de guidage (32) du dispositif de guidage en arc (36), ces rails ayant de préférence essentiellement le même diamètre externe que les éléments de disque (21a, 21 b) et étant montés sur des chariots de guidage (34) du dispositif de guidage en arc (36), fixés au support (8).

17. Unité à tête d'outil selon la revendication 1, **caractérisée en ce que** le premier dispositif d'entraînement (37) présente, fixé au support (8), un moteur (38), de préférence un servomoteur, ainsi qu'un dispositif à engrenage démultiplicateur (39) agissant entre le support (8) et le corps basculant (14).

18. Unité à tête d'outil selon la revendication 17, **caractérisée en ce que** le dispositif à engrenage (39) présente, sur la surface périphérique (23) du corps basculant (14) une denture frontale (42), réalisée de préférence sous la forme d'une denture oblique .

19. Unité à tête d'outil selon la revendication 17, **caractérisée en ce que** le premier dispositif d'entraînement (37) est un entraînement commandé électroniquement.

20. Unité à tête d'outil selon la revendication 1, **caractérisée en ce qu'**il est prévu un dispositif de mesure (43) pour déterminer l'angle d'inclinaison existant entre le support (8) et le corps basculant (14).

21. Unité à tête d'outil selon la revendication 1, **caractérisée en ce que** dans le corps basculant ( 14) est monté en rotation un arbre (47) qui définit le second axe de basculement (A) et sur cet arbre (47) est montée la broche de machine-outil (11).

22. Unité à tête d'outil selon la revendication 1, **caractérisée en ce que** le second dispositif d'entraînement (50) comprend un moteur torque (49) pour assurer l'entraînement direct et pour commander la rotation de la broche de machine-outil (11).

23. Unité à tête d'outil selon la revendication 1, **caractérisée en ce qu'**il est prévu un second dispositif de mesure (51) pour déterminer l'angle d'inclinaison entre la broche de machine-outil (11) et le corps basculant (14).

24. Unité à tête d'outil selon la revendication 1**, caractérisée en ce que** la broche de machine-outil (11) est montée amovible dans un logement de broche (16).

25. Unité à tête d'outil selon une quelconque des revendications précédentes, **caractérisée en ce qu'**un dispositif de guidage en arc (36') est monté actif entre le corps basculant (14) et la broche de machine-outil (11).

26. Machine-outil, en particulier fraiseuse, comportant une poutre porteuse (8) positionnable dans les trois dimensions et équipée d'une unité à tête d'outil (9), en particulier une unité à tête de fraisage, présentant les caractéristiques d'au moins une des revendications précédentes.
